# EUROPEAN PATENT SPECIFICATION

(11) **EP 3 587 486 B1**
(45) Date of publication and mention of the grant of the patent: **28.10.2026**
(21) Application number: 18767110.2
(22) Date of filing: 16.02.2018
(51) Int. Cl.: C08L 9/00, B60C 1/00, C08K 3/04, C08K 5/098, C08L 71/02

(54) **RUBBER COMPOSITION FOR SIDEWALL, AND PNEUMATIC TIRE**
KAUTSCHUKZUSAMMENSETZUNG FÜR SEITENWAND UND LUFTREIFEN
COMPOSITION DE CAOUTCHOUC POUR FLANC, ET PNEUMATIQUE

(30) Priority: 15.03.2017 JP 2017050059
(43) Date of publication of application: 01.01.2020
(73) Proprietor: Sumitomo Rubber Industries, Ltd., Kobe-shi, Hyogo 651-0072 (JP)
(72) Inventor: YOSHIZUMI, Takuma, Kobe-shi Hyogo 651-0072 (JP)
(74) Representative: Manitz Finsterwald Patent- und Rechtsanwaltspartnerschaft mbB
(86) International application number: PCT/JP2018/005372
(87) International publication number: WO 2018/168313

(56) References cited:
- EP-A1- 2 332 743
- WO-A1-2016/084923
- JP-A- 2007 321 041
- JP-A- 2008 150 435
- JP-A- 2013 155 297
- JP-A- 2016 044 270
- JP-A- 2016 108 515
- JP-A- 2016 113 590
- US-A1- 2010 056 667
- US-A1- 2014 090 764
- US-A1- 2016 122 517
- US-A1- 2017 320 358
- UNIKEM HOLDINGS LIMITED: "Products - Carbon black- N550", 2020, SHANDONG, CHINA, pages 1 - 1, XP002800289, Retrieved from the Internet <URL:http://www.unikemholdings.com/e_products/?10-44-1-N550.html> [retrieved on 20200911]

## Description

### TECHNICAL FIELD

The present invention relates to a rubber composition for sidewalls and a pneumatic tire including a sidewall formed from the rubber composition.

### BACKGROUND ART

Recently, with the increasing interest in fuel economy, a need has arisen to provide excellent fuel economy (low heat build-up properties) not only to treads which occupy a large part of the tire volume but also to other tire components such as sidewalls. Since carbon black having a large particle size is generally used in sidewalls, replacing such carbon black with silica cannot be as effective in improving low heat build-up properties as expected.

Patent Literature 1 discloses a rubber composition which contains silicas having different particle sizes to improve fuel economy. However, further improvement is desired in sidewall compounds. Moreover, it is important for rubber compositions for tires not only to provide rubber physical properties such as low heat build-up properties, but also to have reduced scorch and reversion. Thus, a balanced improvement of these properties is also desired. Patent Literature 2 and 3 disclose polyether-containing rubber compositions for tire sidewalls. Patent Literature 4 discloses a rubber composition which is suitable for tire sidewalls and comprises a mixture of zinc benzoate and zinc salts of C₈-C₁₀ fatty acids. Patent Literature 5 discloses rubber compositions for tire sidewalls which comprise a mixture of zinc benzoate and a zinc salt of C₈₋C₁₂ fatty acid.

### CITATION LIST

### PATENT LITERATURE

Patent Literature 1: JP 2008-101127 A
Patent Literature 2: JP 2016-108515 A
Patent Literature 3: JP 2016-113590 A
Patent Literature 4: JP 2007-321041 A
Patent Literature 5: EP 2 332 743 A1

### SUMMARY OF INVENTION

### TECHNICAL PROBLEM

The present invention aims to solve the problems and provide a rubber composition for sidewalls which provides improved low heat build-up properties, and a pneumatic tire including the rubber composition.

### SOLUTION TO PROBLEM

The present invention relates to a rubber composition for sidewalls, containing: a rubber component including 30% by mass or more of an isoprene-based rubber; carbon black; a polyether having an average mass content of at least two consecutive ethylene oxide units of 30% by mass or more based on a total ethylene oxide mass content of the polyether; and at least one of a C4 or higher aliphatic carboxylic acid zinc salt or an aromatic carboxylic acid zinc salt, the rubber composition containing, per 100 parts by mass of the rubber component, 20 parts by mass or more of the carbon black, the carbon black including 50% by mass or more of a carbon black (1) having a CTAB specific surface area of 100 m²/g or less, the rubber composition containing, per 100 parts by mass of the rubber component, 20 parts by mass or less of the polyether, a total of 20 parts by mass or less of the at least one of the aliphatic carboxylic acid zinc salt or aromatic carboxylic acid zinc salt, and no or not more than 10 parts by mass of zinc oxide.

The present invention also relates to a pneumatic tire, including a sidewall formed from the rubber composition.

### ADVANTAGEOUS EFFECTS OF INVENTION

The rubber composition for sidewalls of the present invention contains predetermined amounts of a rubber component including a predetermined amount of an isoprene-based rubber, a specific carbon black, a polyether having an average mass content of at least two consecutive ethylene oxide units of 30% by mass or more based on the total ethylene oxide mass content, and a C4 or higher aliphatic carboxylic acid zinc salt and/or an aromatic carboxylic acid zinc salt, and has a zinc oxide content of not more than a predetermined amount. Such a rubber composition provides significantly improved low heat build-up properties.

### DESCRIPTION OF EMBODIMENTS

The rubber composition for sidewalls of the present invention contains predetermined amounts of a rubber component including a predetermined amount of an isoprene-based rubber, a specific carbon black, a polyether having an average mass content of at least two consecutive ethylene oxide units of 30% by mass or more based on the total ethylene oxide mass content, and a C4 or higher aliphatic carboxylic acid zinc salt and/or an aromatic carboxylic acid zinc salt, and has a zinc oxide content of not more than a predetermined amount.

For example, one proposed technique is to incorporate a polyether to improve processability when a rubber component includes a copolymer of a conjugated diene and a non-conjugated olefin such as SBR. However, the inventor of the present invention has found that combining another rubber component and filler with a polyether may create a new problem, i.e., reduced scorch time, and that, especially when a polyether is combined with a natural rubber compound which can be easily subject to reversion, or a rubber compound containing a large amount of carbon black of a relatively large particle size having a low reinforcing effect, a new problem is created in that the resulting compound may have significantly reduced tensile strength and thus cannot be applied to sidewall compounds requiring strength.

To overcome the problems, the present invention provides a sidewall compound which, when vulcanized, achieves good low heat build-up properties while improving scorch properties and preventing reversion.

With regard to polyethers containing consecutive ethylene oxide units, it is believed that these ethylene oxide units may react with the zinc in zinc oxide and thereby promote cure, resulting in reduced scorch time. Thus, it is considered that their use may not cause a major problem for rubber compounds containing a large amount of a copolymer of a conjugated diene and a non-conjugated olefin which have a low double bond content, but it may cause the above-mentioned new problems for other rubber components such as natural rubber. In this context, the present inventor has solved the problems associated with scorch and reversion by adding a C4 or higher aliphatic carboxylic acid zinc salt and/or an aromatic carboxylic acid zinc salt in an amount in the range of 20 parts by mass or less while reducing the zinc oxide content to 10 parts by mass or less.

The mechanism for solving the problems is not clear but may be explained as follows.

The C4 or higher aliphatic carboxylic acid zinc salt and/or aromatic carboxylic acid zinc salt have greater hindrance than zinc oxide and are less likely to react with consecutive ethylene oxide units at relatively low temperatures before vulcanization, and therefore less likely to cause deterioration of scorch properties. During vulcanization when the temperature is relatively high, they are more likely to react with consecutive ethylene oxide units due to the increased degree of freedom of their zinc, thereby producing a cure promoting effect. The cure promoting effect is greater when the C4 or higher aliphatic carboxylic acid zinc salt and/or aromatic carboxylic acid zinc salt are combined with a polyether. This permits reduction of the amount of zinc oxide for promoting cure. Therefore, it is considered that when a composition containing an isoprene-based rubber and a specific carbon black contains predetermined amounts of a polyether containing a predetermined amount of at least two consecutive ethylene oxide units, and a C4 or higher aliphatic carboxylic acid zinc salt and/or an aromatic carboxylic acid zinc salt, and further has a zinc oxide content that is reduced to a predetermined amount or less, it shows improved scorch properties, reduced reversion, and good low heat build-up properties.

The rubber composition contains an isoprene-based rubber.

Examples of the isoprene-based rubber include synthetic polyisoprene rubber (IR), natural rubber (NR), and modified natural rubber. Examples of the NR include deproteinized natural rubber (DPNR) and highly purified natural rubber (HPNR) . Examples of the modified natural rubber include epoxidized natural rubber (ENR), hydrogenated natural rubber (HNR), and grafted natural rubber. The NR may be a product commonly used in the tire industry, such as SIR20, RSS#3, or TSR20. Among these, NR or IR is preferred, with NR being more preferred.

The amount of the isoprene-based rubber based on 100% by mass of the rubber component in the rubber composition is 30% by mass or more, preferably 40% by mass or more, more preferably 45% by mass or more. When the amount is adjusted to not less than the lower limit, good low heat build-up properties tend to be obtained. The upper limit of the amount is not particularly limited, but is preferably 90% by mass or less, more preferably 75% by mass or less, still more preferably 60% by mass or less.

Examples of rubbers other than isoprene-based rubbers that may be used in the rubber component include polybutadiene rubber (BR), styrene-butadiene rubber (SBR), styrene-isoprene-butadiene rubber (SIBR), ethylene-propylene-diene rubber (EPDM), chloroprene rubber (CR), acrylonitrile butadiene rubber (NBR), and butyl-based rubbers. Among these, BR is preferred in order to produce sidewalls having good rubber physical properties.

Any BR may be used including those commonly used in the tire industry. Examples include high-cis 1,4-polybutadiene rubber (high-cis BR), polybutadiene rubber containing 1,2-syndiotactic polybutadiene crystals (SPB-containing BR), modified polybutadiene rubber (modified BR), and BR synthesized using rare earth catalysts (rare earth catalyzed BR).

The BR may be a commercial product available from, for example, Ube Industries, Ltd., JSR Corporation, Asahi Kasei Corporation, or Zeon Corporation.

The amount of the BR, if present, based on 100% by mass of the rubber component is preferably 10% by mass or more, more preferably 30% by mass or more, still more preferably 40% by mass or more. The amount of the BR is also preferably 80% by mass or less, more preferably 70% by mass or less, still more preferably 60% by mass or less. When the amount is adjusted within the range indicated above, sidewalls having good rubber physical properties tend to be produced.

The rubber composition contains a carbon black (1) having a CTAB specific surface area (cetyltrimethylammonium bromide adsorption specific surface area) of 100 m²/g or less. The CTAB specific surface area is preferably 70 m²/g or less, more preferably 50 m²/g or less. The lower limit is not particularly limited, but is preferably 10 m²/g or more, more preferably 30 m²/g or more, still more preferably 35 m²/g or more. When the CTAB is within the range indicated above, sidewalls having good rubber physical properties tend to be produced.

The CTAB is measured in accordance with JIS K6217-3:2001.

The carbon black (1) content of the rubber composition (the carbon black (1) content based on 100% by mass of the total carbon black in the rubber composition) is 50% by mass or more, preferably 75% by mass or more, more preferably 90% by mass or more, and may be 100% by mass. When the content is adjusted to not less than the lower limit, sidewalls having good rubber physical properties tend to be produced.

Examples of the carbon black used in the rubber composition include N134, N110, N220, N234, N219, N339, N330, N326, N351, N550, and N762. These may be used alone, or two or more of these may be used in combination.

The carbon black may be a commercial product of, for example, Asahi Carbon Co., Ltd., Cabot Japan K.K., Tokai Carbon Co., Ltd., Mitsubishi Chemical Corporation, Lion Corporation, NSCC Carbon Co., Ltd, or Columbia Carbon.

The amount of the carbon black (the total amount of carbon black including the carbon black (1)) per 100 parts by mass of the rubber component in the rubber composition is 20 parts by mass or more, preferably 30 parts by mass or more, more preferably 35 parts by mass or more. When the amount is adjusted to not less than the lower limit, sufficient reinforcement tends to be obtained. The upper limit of the amount is not particularly limited, but is preferably 100 parts by mass or less, more preferably 70 parts by mass or less, still more preferably 50 parts bymass or less. When the amount is adjusted to not more than the upper limit, good low heat build-up properties tend to be obtained.

The rubber composition contains a polyether having an average mass content of at least two consecutive ethylene oxide units of 30% by mass or more based on the total ethylene oxide mass content. The average mass content is preferably 35% by mass or more, more preferably 40% by mass or more. The upper limit is not particularly limited and may be 100% by mass. When the average mass content is adjusted within the range indicated above, the scorch and reversion problems tend to be solved.

The term "average mass content (% by mass) of at least two consecutive ethylene oxide units (consecutive ethylene oxide unit content (% by mass))" refers to the proportion of at least two consecutive polyethylene oxide units relative to the total polyethylene oxide content of the polyether, and is calculated using the following equation: 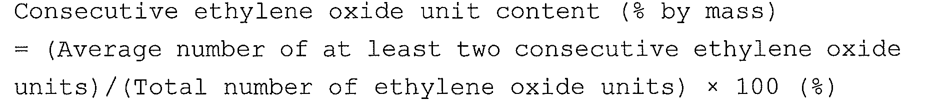 Consecutive ethylene oxide unit content (% by mass) = (Average number of at least two consecutive ethylene oxide units)/(Total number of ethylene oxide units) × 100 (%)

The term "at least two consecutive polyethylene oxide units" refers to at least two ethylene oxide (EO) units sequentially arranged as represented by, for example, -EO-EO-(two consecutive units) or -EO-EO-EO- (three consecutive units).

For example, in the case of a polyether including four ethylene oxide (EO) monomers and one propylene oxide (PO) monomer, the consecutive ethylene oxide unit content is calculated as follows.

**[Table 1]**

| Arrangement | Probability of indicated arrangement | Number of at least two consecutive E0 units | Number of inconsecutive E0 units |
|---|---|---|---|
| HO-PO-E0 -E0 -E0 -E0 -H | 1/5 | 4 | 0 |
| HO-E0 -PO-E0 -E0 -E0 -H | 1/5 | 3 | 1 |
| HO-E0 -E0 -PO-E0 -E0 -H | 1/5 | 4 | 0 |
| HO-EO -E0 -E0 -PO-E0 -H | 1/5 | 3 | 1 |
| HO-E0 -E0 -E0 -E0 -PO-H | 1/5 | 4 | 0 |

$\begin{matrix}Consecutive ethylene oxide unit content \left(% by mass\right) \\ = \left(Average number of at least two consecutive EO units\right) / \left(\begin{matrix}Total \\ number of EO units\end{matrix}\right) \times 100 \left(% by mass\right) \\ = \left(1/5\times 4+1/5\times 3+1/5\times 4+1/5\times 3+1/5\times 4\right) / 4 \times 100 \left(\begin{matrix}% \\ by mass\end{matrix}\right) \\ = 3.6 / 4 \times 100 = 90 \left(% by mass\right)\end{matrix}$

The polyether preferably has a number average molecular weight (relative to styrene standards) of 300 or more, more preferably 1500 or more, still more preferably 2000 or more. The number average molecular weight (relative to styrene standards) of the polyether is also preferably 50000 or less, more preferably 40000 or less, still more preferably 20000 or less. When the polyether has a number average molecular weight within the range indicated above, it tends to migrate to the rubber surface at an appropriate rate (bloom rate) to ensure good appearance.

The amount of the polyether is 20 parts by mass or less, preferably 10 parts by mass or less, more preferably 7 parts by mass or less, still more preferably 5 parts by mass or less. When the amount is adjusted to not more than the upper limit, an effect of reducing acceleration of cure rate tends to be provided, and good appearance tends to be obtained.

The amount is preferably 0.1 parts by mass or more, more preferably 0.3 parts by mass or more, still more preferably 0.6 parts by mass or more. When the amount is adjusted to not less than the lower limit, a good balance between appearance, scorch, and reversion properties tends to be achieved.

The polyether may suitably be a compound represented by R¹-O-(R²-O)ₙ-R³ or R⁴-{(O-R²-O)ₙ-R¹}ₘ where R¹ and R³ each represent a hydrogen atom or a C1-C20 aliphatic hydrocarbon, alicyclic hydrocarbon, aromatic hydrocarbon, or alkanoyl group in which the hydrogen atom bound to the carbon may be replaced with an aromatic hydrocarbon group; each R² is the same or different and represents a C2-C10 divalent aliphatic hydrocarbon or divalent alicyclic hydrocarbon group in which the hydrogen atom bound to the carbon may be replaced with an aromatic hydrocarbon group; R⁴ represents a residue that is a compound (a) having three or more hydroxyl groups from which the hydroxyl groups are removed; and n and m represent integers which are not limited as long as the consecutive ethylene oxide unit content satisfies the range indicated above.

Non-limiting examples of R¹ and R³ include methyl, ethyl, propyl, butyl, pentyl, hexyl, octyl, stearyl, oleyl, cyclohexyl, adamanthyl, phenyl, toluyl, naphthyl, pyridyl, acetyl, propanoyl, butanoyl, hexynoyl, octynoyl, octadecanoyl, oleoyl, and benzoyl groups.

Non-limiting examples of R² include ethylene, propane-1,2-diyl, butane-1,2-diyl, (2-methyl)propane-1,2-diyl, hexane-1,2-diyl, octane-1,2-diyl, (1-phenyl)ethane-1,2-diyl, (1-phenyl)propane-1,2-diyl, cyclohexane-1,2-diyl, and cyclooctane-1,2-diyl groups.

Non-limiting examples of the compound (a) having three or more hydroxyl groups include glycerol, diglycerol, polyglycerol, monosaccharides, polysaccharides, trimethylolpropane, and pentaerythritol.

Specific examples of the polyether include polyalkylene glycols obtained by homopolymerization or copolymerization of oxirane compounds such as ethylene oxide, propylene oxide, 1,2-butylene oxide, 2,3-butylene oxide, 2-methylpropylene oxide, or cyclohexene oxide; compounds obtained by replacing the hydrogen atoms of the hydroxyl groups in the foregoing polyalkylene glycols with alkyl groups (e.g., polyoxyalkylene alkyl ethers, polyoxyalkylene dialkyl ethers); compounds obtained by dehydration reactions of the hydroxyl groups in the foregoing polyalkylene glycols with organic acids; and alkylene oxide adducts of polyhydric alcohols.

The rubber composition contains a C4 or higher aliphatic carboxylic acid zinc salt and/or an aromatic carboxylic acid zinc salt. The use of such a component (s) can solve the scorch problem caused when the polyether is added to a composition containing an isoprene-based rubber and the carbon black (1) . Further, it provides reversion resistance to prevent a deterioration of properties (e.g. low heat build-up properties) due to reversion.

Examples of the aliphatic carboxylic acid of the aliphatic carboxylic acid zinc salt include aliphatic carboxylic acids derived from plant oils such as coconut oil, palm kernel oil, camellia oil, olive oil, almond oil, canola oil, peanut oil, rice bran oil, cacao butter, palm oil, soybean oil, cotton seed oil, sesame oil, linseed oil, castor oil, and rapeseed oil; aliphatic carboxylic acids derived from animal oils such as beef tallow; and aliphatic carboxylic acids chemically synthesized from petroleum oil and other products. Among these, aliphatic carboxylic acids derived from plant oils are preferred, with aliphatic carboxylic acids derived from coconut oil, palm kernel oil, or palm oil being more preferred.

The aliphatic carboxylic acid has a carbon number of 4 or more, preferably 6 or more, more preferably 7 or more. When the carbon number is not less than the lower limit, good dispersibility tends to be obtained. The upper limit of the carbon number of the aliphatic carboxylic acid is not particularly limited, but is preferably 16 or less, more preferably 14 or less, still more preferably 12 or less. When the carbon number is not more than the upper limit, reversion tends to be reduced.

The aliphatic group of the aliphatic carboxylic acid may have an acyclic structure (e.g. an alkyl group) or a cyclic structure (e.g. a cycloalkyl group).

Examples of the aromatic carboxylic acid of the aromatic carboxylic acid zinc salt include benzoic acid, phthalic acid, mellitic acid, hemimellitic acid, trimellitic acid, diphenic acid, toluic acid, and naphthoic acid. Preferred among these is benzoic acid, phthalic acid, or naphthoic acid.

The aromatic carboxylic acid preferably has a carbon number of 4 or more, more preferably 6 or more, still more preferably 7 or more. When the carbon number is not less than the lower limit, good dispersibility tends to be obtained. The upper limit of the carbon number of the aromatic carboxylic acid is not particularly limited, but is preferably 16 or less, more preferably 14 or less, still more preferably 12 or less. When the carbon number is not more than the upper limit, reversion tends to be reduced.

The combined amount of the C4 or higher aliphatic carboxylic acid zinc salt and the aromatic carboxylic acid zinc salt per 100 parts by mass of the rubber component is 20 parts by mass or less, preferably 10 parts by mass or less, more preferably 5 parts by mass or less. When the combined amount is adjusted to not more than the upper limit, good processability tends to be obtained. The lower limit of the combined amount is not particularly limited, but is preferably 0.5 parts by mass or more, more preferably 1.0 part by mass or more, still more preferably 2.0 parts by mass or more. When the combined amount is adjusted to not less than the lower limit, reversion resistance tends to be ensured, and excellent properties such as durability tend to be obtained.

In a suitable embodiment, a mixture of the C4 or higher aliphatic carboxylic acid zinc salt and the aromatic carboxylic acid zinc salt (both components) is used. In this case, the ratio of the aliphatic carboxylic acid zinc salt content to the aromatic carboxylic acid zinc salt content in the mixture (molar ratio, aliphatic carboxylic acid zinc salt/aromatic carboxylic acid zinc salt, hereinafter referred to as content ratio) is preferably 1/20 or higher, more preferably 1/15 or higher, still more preferably 1/10 or higher. When the content ratio is adjusted to not less than the lower limit, the mixture tends to have good dispersibility and good stability. The content ratio is also preferably 20/1 or lower, more preferably 15/1 or lower, still more preferably 10/1 or lower. When the content ratio is adjusted to not more than the upper limit, reversion tends to be reduced.

The zinc content of the mixture, if used, is preferably 3% by mass or more, more preferably 5% by mass or more. When the zinc content is adjusted to not less than the lower limit, reversion tends to be reduced. The zinc content of the mixture is also preferably 30% by mass or less, more preferably 25% by mass or less. When the zinc content is adjusted to not more than the upper limit, good processability tends to be obtained.

The amount of zinc oxide in the rubber composition is 10 parts by mass or less. The scorch and reversion problems can be solved by reducing the amount of zinc oxide. The amount is preferably 5 parts by mass or less, more preferably 3 parts by mass or less. The lower limit is not particularly limited, but is preferably 0.5 parts by mass or more, more preferably 1.0 part by mass or more, still more preferably 1.5 parts by mass or more.

Conventional zinc oxide may be used. Examples include commercial products available from, for example, Mitsui Mining & Smelting Co., Ltd., Toho Zinc Co., Ltd., HakusuiTech Co., Ltd. , Seido Chemical Industry Co., Ltd. and Sakai Chemical Industry Co., Ltd.

The rubber composition preferably contains an oil.

Examples of the oil include process oils and plant oils, and mixtures thereof. Examples of the process oils include paraffinic process oils, aromatic process oils, and naphthenic process oils. Examples of the plant oils include castor oil, cotton seed oil, linseed oil, rapeseed oil, soybean oil, palm oil, coconut oil, peanut oil, rosin, pine oil, pine tar, tall oil, corn oil, rice oil, safflower oil, sesame oil, olive oil, sunflower oil, palm kernel oil, camellia oil, jojoba oil, macadamia nut oil, and tung oil. These may be used alone, or two or more of these may be used in combination. Among these, process oils are preferred in order to achieve the effects of the present invention well.

The oil may be a commercial product available from, for example, Idemitsu Kosan Co., Ltd., Sankyo Yuka Kogyo K.K., Japan Energy Corporation, Olisoy, H&R, Hokoku Corporation, Showa Shell Sekiyu K.K., or Fuji Kosan Co., Ltd.

The amount of the oil per 100 parts by mass of the rubber component is preferably 0.5 parts by mass or more, more preferably 1.0 part by mass or more, still more preferably 1.5 parts by mass or more. The amount is preferably 30 parts by mass or less, more preferably 15 parts by mass or less, still more preferably 7 parts by mass or less. When the amount is adjusted within the range indicated above, the balance between processability and low heat build-up properties tends to be improved.

The rubber composition may contain a resin (component).

The resin preferably has a softening point of 30 to 160°C, more preferably 60 to 130°C, still more preferably 80 to 100°C. When the resin has a softening point within the range indicated above, it tends to disperse well and provide good low heat build-up properties.

Herein, the softening point of the resin is determined in accordance with JIS K 6220-1:2001 using a ring and ball softening point measuring apparatus and defined as the temperature at which the ball drops down.

The amount of the resin per 100 parts by mass of the rubber component is preferably 1 part by mass or more, more preferably 3 parts by mass or more. The amount is also preferably 50 parts by mass or less, more preferably 30 parts by mass or less, still more preferably 15 parts by mass or less.

The resin may be any resin commonly used in the tire industry. Examples include coumarone-indene resins, α-methylstyrene resins, terpene resins, p-t-butylphenol acetylene resins, and acrylic resins. Preferred among these are α-methylstyrene resins.

The term "coumarone-indene resin" refers to a resin containing coumarone and indene as monomer components forming the backbone (main chain) of the resin. The backbone of the resin may contain, in addition to coumarone and indene, monomer components such as styrene, α-methylstyrene, methylindene, and vinyltoluene.

Examples of the α-methylstyrene resins include α-methylstyrene homopolymers and copolymers of α-methylstyrene and styrene.

Examples of the terpene resins include polyterpene, terpene phenol, and aromatic modified terpene resins.

The term "polyterpene" refers to a resin produced by polymerization of a terpene compound, or a hydrogenated product thereof. Examples of such polyterpene resins include terpene resins made from terpene compounds, such as α-pinene resin, β-pinene resin, limonene resin, dipentene resin, and β-pinene-limonene resin, and hydrogenated terpene resins produced by hydrogenation of the foregoing terpene resins. The term "terpene compound" refers to a hydrocarbon having a composition represented by (C₅H₈)ₙ or an oxygen-containing derivative thereof, each of which has a terpene backbone and is classified as, for example, a monoterpene (C₁₀H₁₆), sesquiterpene (C₁₅H₂₄), or diterpene (C₂₀H₃₂).

Examples of the terpene phenol resins include resins produced by copolymerization of the above-mentioned terpene compounds and phenolic compounds, and resins produced by hydrogenation of these resins. Specific examples include resins produced by condensation of the above-mentioned terpene compounds, phenolic compounds, and formaldehyde. Such phenolic compounds include, for example, phenol, bisphenol A, cresol, and xylenol.

Examples of the aromatic modified terpene resins include resins obtained by modifying terpene resins with aromatic compounds, and resins obtained by hydrogenating these resins. Any aromatic compound that has an aromatic ring may be used. Examples include phenol compounds such as phenol, alkylphenols, alkoxyphenols, and unsaturated hydrocarbon group-containing phenols; naphthol compounds such as naphthol, alkylnaphthols, alkoxynaphthols, and unsaturated hydrocarbon group-containing naphthols; styrene and styrene derivatives such as alkylstyrenes, alkoxystyrenes, and unsaturated hydrocarbon group-containing styrenes; and coumarone and indene.

Examples of the p-t-butylphenol acetylene resins include resins produced by condensation of p-t-butylphenol and acetylene.

Non-limiting suitable examples of the acrylic resins include solvent-free acrylic resins. The term "solvent-free acrylic resin" includes (meth)acrylic resins (polymers) synthesized by high temperature continuous polymerization (high temperature continuous bulk polymerization as described in, for example, US Patent No. 4,414,370, JP S59-6207 A, JP H5-58005 B, JP H1-313522 A, US Patent No. 5,010,166, annual research report TREND 2000 issued by Toagosei Co., Ltd., vol. 3, pp. 42-45) using no or minimal amounts of auxiliary raw materials such as polymerization initiators, chain transfer agents, and organic solvents. The term "(meth)acrylic" means methacrylic and acrylic.

The resin may be a commercial product available from, for example, Maruzen Petrochemical Co., Ltd., Sumitomo Bakelite Co., Ltd., Yasuhara Chemical Co., Ltd., Tosoh Corporation, Rutgers Chemicals, BASF, Arizona Chemical, Nitto Chemical Co., Ltd., Nippon Shokubai Co., Ltd., JX Energy Corporation, Arakawa Chemical Industries, Ltd., or Taoka Chemical Co., Ltd.

The rubber composition preferably contains a wax.

Non-limiting examples of the wax include petroleum waxes such as paraffin waxes and microcrystalline waxes; naturally-occurring waxes such as plant waxes and animal waxes; and synthetic waxes such as polymers of ethylene, propylene, or other monomers. These may be used alone, or two or more of these may be used in combination. Among these, petroleum waxes are preferred, with paraffin waxes being more preferred.

The wax may be a commercial product available from, for example, Ouchi Shinko Chemical Industrial Co., Ltd., Nippon Seiro Co., Ltd., or Seiko Chemical Co., Ltd.

The amount of the wax per 100 parts by mass of the rubber component in the rubber composition is preferably 0.5 parts by mass or more, more preferably 0.8 parts by mass or more. The amount is also preferably 10 parts by mass or less, more preferably 5 parts by mass or less, still more preferably 3 parts by mass or less.

The rubber composition preferably contains an antioxidant.

Examples of the antioxidant include: naphthylamine antioxidants such as phenyl-α-naphthylamine; diphenylamine antioxidants such as octylated diphenylamine and 4,4'-bis(α,α'-dimethylbenzyl)diphenylamine; p-phenylenediamine antioxidants such as N-isopropyl-N'-phenyl-p-phenylenediamine, N-(1,3-dimethylbutyl)-N'-phenyl-p-phenylenediamine, and N,N'-di-2-naphthyl-p-phenylenediamine; quinoline antioxidants such as 2,2,4-trimethyl-1,2-dihydroquinoline polymer; monophenolic antioxidants such as 2,6-di-t-butyl-4-methylphenol and styrenated phenol; and bis-, tris-, or polyphenolic antioxidants such as tetrakis[methylene-3-(3',5'-di-t-butyl-4'-hydroxyphenyl)-propionate]methane. Among these, p-phenylenediamine and/or quinoline antioxidants are preferred, with N-(1,3-dimethylbutyl)-N'-phenyl-p-phenylenediamine and/or 2,2,4-trimethyl-1,2-dihydroquinoline polymer being more preferred.

The antioxidant may be a commercial product available from, for example, Seiko Chemical Co., Ltd., Sumitomo Chemical Co., Ltd., Ouchi Shinko Chemical Industrial Co., Ltd., or Flexsys.

The amount of the antioxidant per 100 parts by mass of the rubber component in the rubber composition is preferably 1 part by mass or more, more preferably 2 parts by mass or more. The amount is also preferably 10 parts by mass or less, more preferably 7 parts by mass or less.

The rubber composition preferably contains stearic acid.

Conventional stearic acid may be used. Examples include commercial products available from, for example, NOF Corporation, NOF Corporation, Kao Corporation, Wako Pure Chemical Industries, Ltd., and Chiba Fatty Acid Co., Ltd.

The amount of the stearic acid per 100 parts by mass of the rubber component in the rubber composition is preferably 0.3 parts by mass or more, more preferably 1.0 part by mass or more. The amount is also preferably 3.0 parts by mass or less, more preferably 2.5 parts by mass or less. When the amount is adjusted within the range indicated above, the scorch and reversion problems can be solved.

The rubber composition preferably contains sulfur.

Examples of the sulfur include those commonly used in the rubber industry, such as powdered sulfur, precipitated sulfur, colloidal sulfur, insoluble sulfur, highly dispersible sulfur, and soluble sulfur. These may be used alone, or two or more of these may be used in combination.

The sulfur may be a commercial product available from, for example, Tsurumi Chemical Industry Co., Ltd., Karuizawa Sulfur Co., Ltd., Shikoku Chemicals Corporation, Flexsys, Nippon Kanryu Industry Co., Ltd., or Hosoi Chemical Industry Co., Ltd.

The amount of the sulfur per 100 parts by mass of the rubber component in the rubber composition is preferably 0.5 parts by mass or more, more preferably 0.8 parts by mass or more. The amount is also preferably 10 parts by mass or less, more preferably 5 parts by mass or less, still more preferably 3 parts by mass or less.

The rubber composition preferably contains a vulcanization accelerator.

Examples of the vulcanization accelerator include: thiazole vulcanization accelerators such as 2-mercaptobenzothiazole, di-2-benzothiazolyl disulfide, and N-cyclohexyl-2-benzothiazylsulfenamide; thiuram vulcanization accelerators such as tetramethylthiuram disulfide (TMTD), tetrabenzylthiuram disulfide (TBzTD), and tetrakis(2-ethylhexyl)thiuram disulfide (TOT-N); sulfenamide vulcanization accelerators such as N-cyclohexyl-2-benzothiazole sulfenamide, N-t-butyl-2-benzothiazolyl sulfenamide, N-oxyethylene-2-benzothiazole sulfenamide, N-oxyethylene-2-benzothiazole sulfenamide, and N,N'-diisopropyl-2-benzothiazole sulfenamide; and guanidine vulcanization accelerators such as diphenylguanidine, diorthotolylguanidine, and orthotolylbiguanidine. These may be used alone, or two or more of these may be used in combination. Among these, sulfenamide or guanidine vulcanization accelerators are preferred in order to more suitably achieve the effects of the present invention.

The amount of the vulcanization accelerator per 100 parts by mass of the rubber component in the rubber composition is preferably 0.5 parts by mass or more per 100 parts by mass of the rubber component. The amount is also preferably 5 parts by mass or less, more preferably 3 parts by mass or less.

In addition to the above-mentioned components, the rubber composition may contain other additives commonly used in the tire industry. Examples include organic peroxides; fillers such as silica, calcium carbonate, talc, alumina, clay, aluminum hydroxide, and mica; and processing aids such as plasticizers and lubricants.

The rubber composition may be prepared, for example, by kneading the above-mentioned components in a rubber kneading machine such as an open roll mill or a Banbury mixer, and vulcanizing the kneaded mixture.

The pneumatic tire of the present invention may be produced using the rubber composition for sidewalls by usual methods. Specifically, the unvulcanized rubber composition containing the above-mentioned components may be extruded into the shape of a sidewall and assembled with other tire components on a tire building machine in a usual manner to build an unvulcanized tire, which may then be heated and pressurized in a vulcanizer to produce a tire.

### EXAMPLES

The chemicals used in examples and comparative examples are listed below.
NR: TSR20
BR: BR150B (cis content: 97% by mass) available from Ube Industries, Ltd.
Carbon black 1: DIABLACK N550 (CTAB: 42 m²/g, N₂SA: 40 m²/g) available from Mitsubishi Chemical Corporation
Carbon black 2: DIABLACK N220 (CTAB: 110 m²/g, N₂SA: 114 m²/g) available from Mitsubishi Chemical Corporation
Carbon black 3: SHOBLACK N330 (CTAB: 78 m²/g, N₂SA: 78 m²/g) available from Cabot Japan K.K.
Wax: Ozoace OZ0355 available from Nippon Seiro Co., Ltd.
Antioxidant 6C: NOCRAC 6C (N-phenyl-N'-(1, 3-dimethylbutyl)-p-phenylenediamine) available from Ouchi Shinko Chemical Industrial Co., Ltd.
Antioxidant RD: NOCRAC 224 (poly(2,2,4-trimethyl-1,2-dihydroquinoline)) available from Ouchi Shinko Chemical Industrial Co., Ltd.
Mixture 1: Activator 73A available from Struktol, a mixture of a C4 or higher aliphatic carboxylic acid zinc salt and an aromatic carboxylic acid zinc salt [(i) aliphatic carboxylic acid zinc salt: coconut oil-derived fatty acid (carbon number: 8 to 12) zinc salt, (ii) aromatic carboxylic acid zinc salt: zinc benzoate, molar content ratio: 1/1, zinc content: 17% by mass]
Stearic acid: stearic acid "TSUBAKI" available from NOF Corporation
Zinc oxide: Ginrei R available from Toho Zinc Co., Ltd.
Surfactant 1: Pluronic nonionic surfactant (PEG/PPG-25/30 copolymer, consecutive ethylene oxide unit content: 100% by mass)
Surfactant 2: polyoxyethylene polyoxypropylene butyl ether (average number of moles of EO added: 5, average number of moles of PO added: 5, consecutive ethylene oxide unit content: 43% by mass)
Surfactant 3: polyoxyethylene polyoxypropylene butyl ether (average number of moles of EO added: 35, average number of moles of PO added: 28, consecutive ethylene oxide unit content: 48% by mass)
Surfactant 4: polyoxyethylene polyoxypropylene glyceryl ether (average number of moles of EO added: 24, average number of moles of PO added: 24, consecutive ethylene oxide unit content: 38% by mass)
Surfactant 5: polyethylene glycol (consecutive ethylene oxide unit content: 100% by mass)
Surfactant 6: polyoxyethylene sorbitan monooleate (consecutive ethylene oxide unit content: 84.3% by mass)
Oil: Diana Process NH-70S (aromatic process oil) available from Idemitsu Kosan Co., Ltd.
Sulfur: 10% oil-containing insoluble sulfur (Seimi sulfur available from Nippon Kanryu Industry Co., Ltd., insoluble sulfur containing 60% or more of matter insoluble in carbon disulfide, oil content: 10%)
Vulcanization accelerator NS: NOCCELER NS (N-tert-butyl-2-benzothiazolylsulfenamide) available from Ouchi Shinko Chemical Industrial Co., Ltd.

### <Examples and Comparative Examples>

The chemicals other than the sulfur and vulcanization accelerator in the amounts shown in Table 2 or Table 3 were kneaded using a Banbury mixer at 150°C for 5 minutes to give a kneaded mixture. The sulfur and vulcanization accelerator were added to the kneaded mixture, and they were kneaded using an open roll mill at 90°C for 3 minutes to give an unvulcanized rubber composition.

The unvulcanized rubber composition was formed into a sidewall shape and then assembled with other tire components on a tire building machine, followed by press-vulcanization at 170°C for 20 minutes to prepare a test tire (tire size: 195/65R15) .

### (Scorch)

A Mooney scorch test was performed in accordance with JIS K 6300 "Physical Testing Methods For Unvulcanized Rubber" to measure the t10 (min.) at 130.0±0.5°C. The t10 of each formulation example is expressed as an index (Mooney scorch time index), with Comparative Example 1 set equal to 100. A short scorch time tends to lead to a rubber scorch problem. A higher index is better in this evaluation.

### (Reversion resistance)

A vulcanization curve at 170°C of the unvulcanized rubber composition of each formulation example was measured using a vulcanization tester (e.g., Curelastometer available from JSR Trading Co. , Ltd.). A maximum torque (MH), minimum torque (ML), and M20 which was a torque measured 20 minutes after the start of vulcanization were determined. The values were substituted into the equation below to evaluate the reversion resistance of the compositions. A reversion resistance ratio (%) closer to 100% by mass indicates better reversion resistance.$\left(Reversion resistance ratio \left(%\right)\right) = \left(M20 - ML\right) / \left(MH - ML\right) \times 100$

### (Low heat build-up properties (tan δ))

Samples were taken from the sidewalls of the test tires and measured for loss tangent (tan δ) at 60°C using a viscoelastic spectrometer (Ueshima Seisakusho Co., Ltd.) at an initial strain of 10%, a dynamic strain of 2%, and a frequency of 10 Hz. The tan δ values are expressed as an index, with Comparative Example 1 set equal to 100. A higher index indicates better low heat build-up properties.

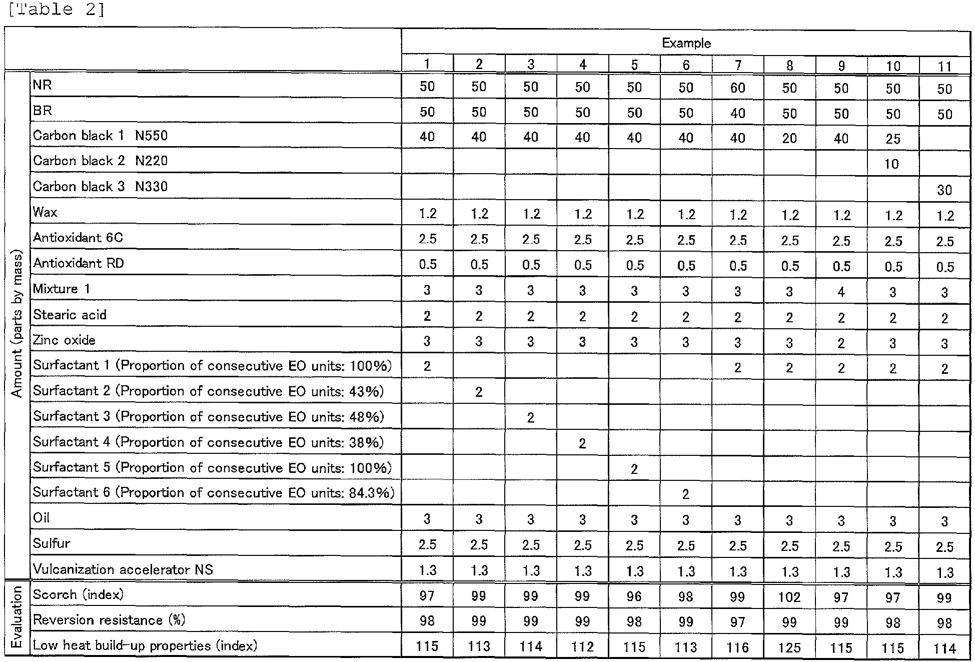

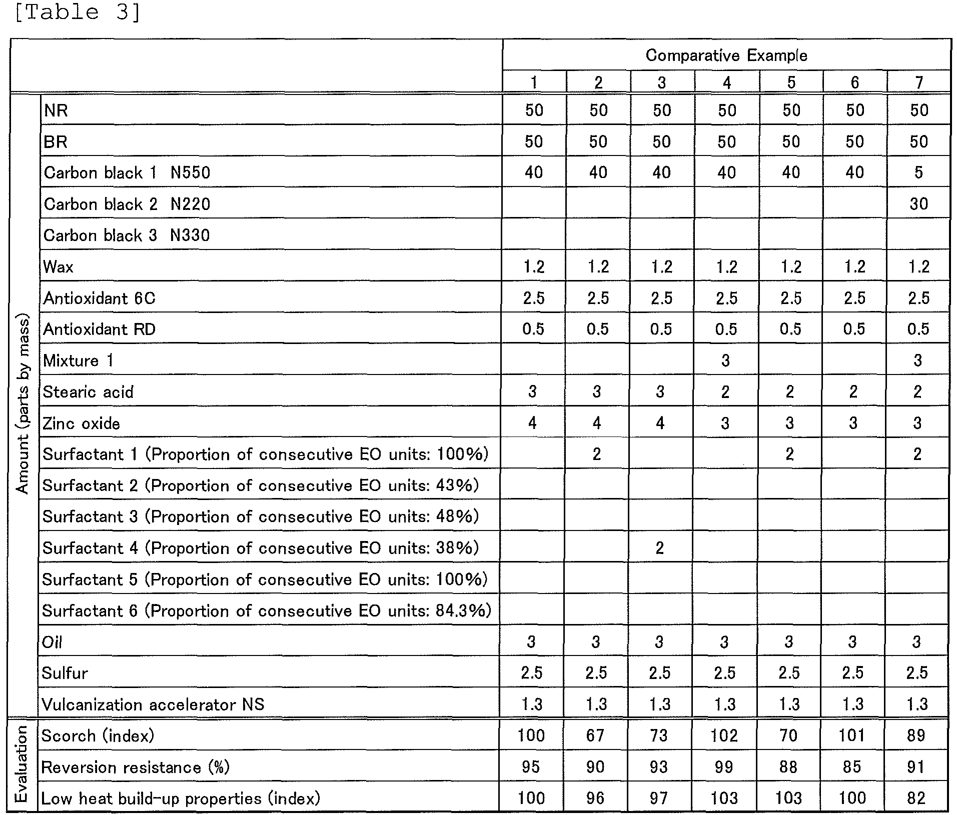

As shown in Tables 2 and 3, the examples containing predetermined amounts of an isoprene-based rubber, a specific carbon black, a polyether having an average mass content of at least two consecutive ethylene oxide units of 30% by mass or more based on the total ethylene oxide mass content, and a C4 or higher aliphatic carboxylic acid zinc salt and/or an aromatic carboxylic acid zinc salt exhibited better low heat build-up properties than the comparative examples not containing the polyether, or the aliphatic carboxylic acid zinc salt and/or aromatic carboxylic acid zinc salt. Further, the examples were also excellent in the balance between low heat build-up properties, scorch resistance, and reversion resistance.

Tables 2 and 3 demonstrate that the low heat build-up properties and the balance between the properties of a sidewall compound containing an isoprene-based rubber and a specific carbon black were synergistically improved by incorporating both the polyether and the aliphatic carboxylic acid zinc salt and/or aromatic carboxylic acid zinc salt into the compound.

## Claims

1. A rubber composition for sidewalls, comprising:
a rubber component comprising 30% by mass or more of an isoprene-based rubber;
carbon black;
a polyether having an average mass content of at least two consecutive ethylene oxide units of 30% by mass or more based on a total ethylene oxide mass content of the polyether; and
at least one of a C4 or higher aliphatic carboxylic acid zinc salt or an aromatic carboxylic acid zinc salt,
the rubber composition comprising, per 100 parts by mass of the rubber component, 20 parts by mass or more of the carbon black,
the carbon black comprising 50% by mass or more of a carbon black (1) having a CTAB specific surface area of 100 m²/g or less, wherein the CTAB is measured in accordance with JIS K6217-3:2001,
the rubber composition comprising, per 100 parts by mass of the rubber component, 20 parts by mass or less of the polyether, a total of 20 parts by mass or less of the at least one of the aliphatic carboxylic acid zinc salt or aromatic carboxylic acid zinc salt, and no or not more than 10 parts by mass of zinc oxide.

2. A pneumatic tire, comprising a sidewall formed from the rubber composition according to claim 1.

## Patentansprüche

1. Kautschukzusammensetzung für Seitenwände, umfassend:
eine Kautschukkomponente, die 30 Massen-% oder mehr eines Isopren-basierten Kautschuks umfasst;
Ruß;
einen Polyether, der einen durchschnittlichen Massengehalt an mindestens zwei aufeinanderfolgenden Ethylenoxideinheiten von 30 Massen-% oder mehr aufweist, bezogen auf einen gesamten Ethylenoxid-Massengehalt des Polyethers; und
mindestens eines von einem aliphatischen C4- oder höheren Carbonsäure-Zinksalz oder einem aromatischen Carbonsäure-Zinksalz,
wobei die Kautschukzusammensetzung, je 100 Massenteile der Kautschukkomponente, 20 Massenteile oder mehr des Rußes umfasst,
wobei der Ruß 50 Massen-% oder mehr eines Rußes (1) umfasst, der eine spezifische CTAB-Oberfläche von 100 m²/g oder weniger aufweist, wobei das CTAB gemäß JIS K6217-3:2001 gemessen ist,
wobei die Kautschukzusammensetzung, je 100 Massenteile der Kautschukkomponente, 20 Massenteile oder weniger des Polyethers, eine Gesamtmenge von 20 Massenteilen oder weniger des mindestens einen von dem aliphatischen Carbonsäure-Zinksalz oder aromatischen Carbonsäure-Zinksalz, und kein oder nicht mehr als 10 Massenteile Zinkoxid umfasst.

2. Luftreifen, umfassend eine Seitenwand, die mit der Kautschukzusammensetzung nach Anspruch 1 gebildet ist.

## Revendications

1. Composition de caoutchouc pour parois latérales, comprenant :
un composant de caoutchouc comprenant 30 % en masse ou plus d'un caoutchouc à base d'isoprène ;
du noir de carbone ;
un polyéther ayant une teneur massique moyenne en au moins deux unités consécutives d'oxyde d'éthylène de 30 % en masse ou plus, sur la base d'une teneur massique totale en oxyde d'éthylène du polyéther ; et
au moins un sel parmi un sel de zinc d'un acide carboxylique aliphatique en C4 ou supérieur ou un sel de zinc d'un acide carboxylique aromatique,
la composition de caoutchouc comprenant, pour 100 parts en masse du composant de caoutchouc, 20 parts en masse ou plus du noir de carbone,
le noir de carbone comprenant 50 % en masse ou plus d'un noir de carbone (1) ayant une surface spécifique CTAB de 100 m²/g ou moins, la surface spécifique CTAB étant mesurée conformément à la norme industrielle japonaise JIS K6217-3:2001,
la composition de caoutchouc comprenant, pour 100 parts en masse du composant de caoutchouc, 20 parts en masse ou moins du polyéther, un total de 20 parts en masse ou moins dudit au moins un sel parmi un sel de zinc d'un acide carboxylique aliphatique ou un sel de zinc d'un acide carboxylique aromatique, et aucune ou pas plus de 10 parts en masse d'oxyde de zinc.

2. Bandage pneumatique, comprenant une paroi latérale formée à partir de la composition de caoutchouc selon la revendication 1.
